# EUROPÄISCHE PATENTSCHRIFT

(11) **EP 1 694 518 B1**
(45) Veröffentlichungstag und Bekanntmachung des Hinweises auf die Patenterteilung: **10.10.2012**
(21) Anmeldenummer: 04802883.1
(22) Anmeldetag: 06.12.2004
(51) Int. Cl.: B60B 27/00, F16C 35/067

(54) **RADLAGERMODUL IN EINEM RADTRÄGER**
WHEEL BEARING MODULE IN A WHEEL CARRIER
MODULE DE ROULEMENT DE ROUE POUR SUPPORT DE ROUE

(30) Priorität: 18.12.2003 DE 10359645
(43) Veröffentlichungstag der Anmeldung: 30.08.2006
(73) Patentinhaber: Schaeffler Technologies AG & Co. KG, 91074 Herzogenaurach (DE)
(72) Erfinder: NIEBLING, Peter, 97688 Bad Kissingen (DE); HEIM, Jens, 97493 Bergrheinfeld (DE); HOFMANN, Heinrich, 97422 Schweinfurt (DE); LANGER, Roland, 97523 Schwanfeld (DE); DLUGAI, Darius, 97421 Schweinfurt (DE); DÖPPLING, Horst, 91074 Herzogenaurach (DE); STEINBERGER, Wolfgang, 91074 Herzogenaurach (DE)
(86) Internationale Anmeldenummer: PCT/DE2004/002675
(87) Internationale Veröffentlichungsnummer: WO 2005/058614

(56) Entgegenhaltungen:
- DE-A1- 3 940 395
- FR-A- 2 631 402
- US-A- 5 494 358

## Beschreibung

### Gebiet der Erfindung

Radlagermodul in einem Radträger, mit einem Radlager und mit einem Radflansch, wobei der Radflansch mittels des Radlagers um eine Rotationsachse drehbar zu dem Radträger gelagert ist, das Radlagermodul mit den Merkmalen:
- das Radlager weist zumindest einen Außenring auf,
- das Radlager ist zumindest abschnittsweise über den Außenring zumindest radial zur Rotationsachse in dem Radträger abgestützt,
- der Außenring weist axial endseitig des Außenringes einen radial von der Rotationsachse wegweisenden Flansch auf,
- der Flansch ist axial mit Befestigungselementen zu dem Radträger fest, wobei das Befestigungselement den Flansch an einer von dem Radträger axial abgewandten Seite des Flansches wenigstens teilweise hintergreift und dabei das Befestigungselement axial fest an dem Flansch anliegt
- der Radflansch liegt dem Außenring axial gegenüber, wobei der Radflansch von der Rotationsachse weg zumindest abschnittsweise weiter radial hervorsteht als der Flansch.

### Hintergrund der Erfindung

DE 39 40 395 A1 beschreibt eine Radlagerung mit einem Außenring, Wälzkörpern und zwei Innenringen, bei der der Außenring axial zwischen den Stirnseiten und von den Stirnseiten weg einen radialen Flansch aufweist, mit dem die Radlagerung aufgehängt ist. Das Radlager ist über den Flansch axial und radial am Radträger fest. Ein sich dem Flansch axial anschließender hohlzylindrischer Abschnitt des Außenringes sitzt in einem Loch des Trägers, so dass der Außenring mittels des Flansches axial und zumindest mit dem Abschnitt zumindest teilweise radial an dem Träger anliegt.

Die US 5,494,358 betrifft eine Radlageranordnung umfassend ein Radlager mit einem Radflansch, bestehend aus einem Außenring und einem Innenring, zwischen denen auf außen- bzw. innenringseitig vorgesehenen Laufbahnen Wälzkörper abwälzen. An dem Außenring sind bezogen auf die Rotationsachse drei radial nach außen ragende Flansche mit je einer kreisförmigen Öffnung ausgebildet, so dass der Außenring mittels Befestigungsmitteln in Form von Bolzen in einem Radträger befestigbar ist, wobei die Bolzen jeweils durch die Flansche in eine Gewindebohrung des Radträgers eingreifen.

Die Montage des Radlagers in den Träger ist insbesondere dann kompliziert, wenn das Radlager zusammen mit einer Nabe, an der der Radflansch fest vormontiert ist, an den Träger montiert werden soll. Das axiale Zuführen der Befestigungselemente, wie Schraubbolzen oder ähnliches, ist ohne weiteres nicht möglich, da der Radflansch axial im Wege ist.

### Zusammenfassung der Erfindung

Die Aufgabe der Erfindung ist es daher, ein Radlagermodul zu schaffen, dessen Befestigung an dem Radträger vereinfacht ist.

Diese Aufgabe ist nach dem Gegenstand des Anspruches 1 gelöst.

Der Radflansch weist axial durch den Radflansch hindurchführende erste Ausnehmungen auf, durch die die Befestigungselemente axial auf den Flansch des Außenringes zugeführt werden können. Der Flansch liegt da, wo das Befestigungselement anliegt, zumindest einmal pro Umdrehung des Radflansches um die Rotationsachse wenigstens einer der ersten Ausnehmungen axial so gegenüber, dass der Radflansch den Flansch wenigstens da, wo das Befestigungselement anliegt, axial in Richtung des Radträgers nicht verdeckt. Das heißt, der Flansch ist zumindest da, wo das Befestigungselement anliegt, wenigstens einmal pro Umdrehung des Radflansches um die Rotationsachse durch den Radflansch axial nicht verdeckt, da wenigstens eine der ersten Ausnehmungen dem Flansch da, wo das Befestigungselement anliegt, zumindest einmal pro Umdrehung axial gegenüber liegt. Die axiale Projektion des Umrisses des Befestigungselements auf den Flansch liegt innerhalb der axialen Projektion der Ausnehmung, wobei die auf den Flansch axial gerichtete Projektion der Kontur der Ausnehmung den Umriss axial nicht verdeckt. In den Radflansch ist wenigstens eine dieser Ausnehmungen eingebracht.

Der Radflansch wird zum Anbringen/Einbringen der Befestigungselemente zunächst um die Rotationsachse soweit gedreht, dass die Ausnehmung z.B. einem der Befestigungslöcher an dem Flansch des Außenringes und somit auch einem Befestigungsloch in dem Radträger gegenüberliegt. Das Befestigungsmittel wird dann mittels einer Vorrichtung oder eines Werkzeuges durch die Ausnehmung an dem Radflansch hindurch geführt und an dem Radträger befestigt. Danach wird der Radflansch wieder solange gedreht, bis die Ausnehmung einem weiteren Befestigungsloch axial gegenüberliegt. Der Vorgang wiederholt sich dann wie zuvor beschrieben solange, bis der Flansch des Außenringes an dem Träger fest ist.

Die Erfindung ist für die Montage von Radlagereinheiten in einen Radträger von Vorteil, bei denen in dem Außenring eine Nabe über wenigstens zwei Reihen Wälzkörper an den Laufbahnen um die Rotationsachse drehbar abgestützt ist und dabei der Radflansch radial von der Nabe abgeht, und an denen die Nabe axial unlösbar zu dem Außenring in dem Radlager gelagert ist.

Eine Ausgestaltung der Erfindung sieht vor, dass jede dieser Ausnehmungen an dem Radflansch, und zwar zeitgleich, zumindest einmal pro Drehung des Radflansches um die Rotationsachse, jeweils dem Flansch axial so gegenüberliegt, dass der Radflansch den Flansch da, wo die Befestigungselemente anliegen, in axiale Richtung nicht verdeckt. So können alle Befestigungselemente mit einer Vorrichtung gleichzeitig durch den Radflansch hindurchgeführt werden. Der Flansch ist somit zeitsparend an dem Träger befestigt.

Mehrere der Ausnehmungen sind beispielsweise um die Rotationsachse mit gleicher Teilung zueinander angeordnet. Die Ausnehmungen sind entweder radial nach außen offen oder die Ausnehmungen sind axial durch den Radflansch hindurchführende Löcher.

In den Löchern sind zum Beispiel nach der Befestigung des Außenringes an dem Radträger Radbolzen zur Befestigung eines Fahrzeugrades an dem Radflansch aufgenommen. In diesem Fall sind die Befestigungslöcher beispielsweise mit einer Teilung umfangsseitig verteilt, die der Teilung entspricht, mit der die Löcher zur Aufnahme des Radbolzens umfangsseitig verteilt sind.

Das Radlager ist zum Einpressen in eine Bohrung des Radträgers vorgesehen. Hierzu wird die Einpresskraft auf den Flansch des Außenringes und nicht auf den Radflansch ausgeübt. Dadurch sind die Wälzkörper und die Laufbahnen des Radlagers von axialen Einpresskräften frei. Dabei weist der Radflansch eine größere Anzahl der Ausnehmungen auf als Befestigungselemente zur Befestigung des Radflansches vorgesehen sind. Das ist dann von Vorteil, wenn die Radlagereinheit mit dem Radflansch in das Loch eines Radträgers eingepresst wird und vorher Zentrierdorne durch die Ausnehmungen hindurchgeführt werden. Mit diesen Zentrierdornen werden die Durchgangslöcher in dem Flansch des Außenringes zu den Befestigungslöchern zentriert. In diesem Falle greifen Axialstützen axial durch die überzähligen Löcher und stützen sich an dem Flansch des Außenringes ab, so dass die Einpresskräfte nach dem Zentriervorgang auf den Flansch aufgebracht werden können.

Mit der Erfindung ist ein Verfahren zur Montage des Radlagermoduls vorgesehen, bei dem das Radlager, mit einer Nabe und dem Randflansch als Einheit in den Radträger montiert und an dem Radträger befestigt wird. Die Verfahrensschritte sind nachfolgend in dem Kapitel detaillierte Beschreibung der Erfindung näher beschrieben.

Die Erfindung ist bevorzugt für Anwendungen vorgesehen, bei denen der Flansch axial endseitig des Außenringes ausgebildet ist. Der Flansch liegt entweder direkt axial an dem Radträger an oder stützt sich über Distanzmittel axial an dem Radträger ab. Über den Flansch ist das Radlager axial in dem Loch zum Träger gesichert, da der Flansch mit geeigneten Mitteln an dem Flansch befestigt ist. Das axiale Wandern des Außenringes im Fahrbetrieb ist vermieden. Außerdem ist die Kehle an dem Übergang vom Flansch zu dem Außenring von vorneherein entlastet, da der Außenring sich unter Last radial in dem Träger abstützt.

Unter Radträger sind in diesem Sinne alle Anschlusskonstruktionen für Radlagermodule und Radlagereinheiten angetriebener und nicht angetriebener Räder zu verstehen, an/in denen die Radlagermodule bzw. Radlagereinheiten befestigt sind. Die gegossenen oder geschmiedeten bzw. auf andere geeignete Art hergestellten Radträger sind aus allen denkbaren Materialien, also aus Stahl und/oder zumindest um das Loch zur Aufnahme der Radlagerung aus Aluminiumlegierungen hergestellt. Ein gemäß Erfindung mittels des Flansches des Außenringes am Radträger axial festes Radlager ist axial auch fest, wenn sich der Radialsitz des Radlagers z.B. in einem Träger aus einer Aluminiumlegierung radial aufgrund verschiedener Einflussfaktoren gelockert hat.

Unter Radlager sind in diesem Sinne alle ein-, zwei- und mehrreihigen Radlader mit Rollen und/oder Kugeln als Wälzkörper, mit einem oder mehr ein- bzw. mehrteiligen Innenringen zu verstehen, die in den unterschiedlichsten Anordnungen, wie in Radial- oder Schrägkugellageranordnung bzw. wie in Radial- oder Schrägrollenlageranordnung ausgeführt sind. Alternativ ist eine oder sind alle der Innenlaufbahnen nicht an einem/mehreren Innenringen sondern direkt an einer in dem Radlager angeordneten Nabe ausgebildet.

Die Nabe eines Radlagermoduls für ein getriebenes oder nicht getriebenes Rad ist vor dem Einbau der Radlagerung in den Radträger in dem Radlager zum Beispiel vorzugsweise durch einen Bördelbord an der Nabe fest. Der Bördelbord hintergreift dabei die Lageranordnung so, dass die Nabe untrennbar von dem Radlager an dem Radlager fest ist. Alternativ sind auch Radlagereinheiten vorgesehen, bei denen die Nabe als Einzelteil lösbar von dem Radlager mit dem Radlager als Einheit montiert werden soll.

Eine Ausgestaltung der Erfindung sieht vor, dass der Außenring relativ dünnwandig und somit im Vergleich zu dem steifen, das Loch umgebende Gehäuse elastisch ist. Die Wand des Außenringes weist dünne Querschnitte auf. So ist der Außenring, insbesondere ein durch Kaltumformen gefertigter, partiell gehärteter oder insgesamt gehärteter Ring oder ein beliebig gefertigter Außenring ohne spanabhebende Nacharbeit nach dem Härten, als Einzelteil außen und insbesondere innen an den Laufbahnen so in sich instabil oder unrund, dass die für den Wälzkontakt notwendige optimale Geometrie zunächst nicht verwirklicht ist. Das betrifft insbesondere den Durchmesser und die Rundheit des quer zur Rotationsachse betrachteten Abschnittes, mit dem der Außenring in das Loch eingepresst ist, vor der Montage in den Radträger. Unter optimaler Geometrie ist in diesem Falle die Rundheit der Laufbahnen im Wälzkontakt zu verstehen, die optimale Wälzverhältnisse im Lager absichert. Derartige Formgenauigkeiten werden üblicherweise an massiven spanabhebend bearbeiteten Lagerringen und den Gehäusebohrungen zur Aufnahme der Lagerringe durch Drehen und Schleifen erzeugt. Die Herstellung derartiger Geometrie ist zeitaufwändig und teuer.

Die fertige Kontur des Außenringes weist in einer Ausgestaltung der Erfindung, zumindest an dem Abschnitt, die genannten Abweichungen von der optimalen Geometrie auf. Das Loch des Trägers entspricht aufgrund seiner durch Spanabheben erzeugten Geometrie den optimalen Anforderungen.

Die Abweichungen der Außenkontur des Außenringes von der optimalen Geometrie werden durch das elastische - teils plastische Verhalten des Außenringes ausgeglichen, wenn der Außenring in das Loch eingepresst ist. Dazu weist der Außenring zunächst wenigsten an dem Abschnitt einen Außendurchmesser auf, der größer ist als der Innendurchmesser des Loches. Das Übermaß ist auch für den Presssitz erforderlich, mit dem der Außenring im Träger sitzt. Durch das Einpressen das Loch schnürt sich der Außenring radial nach innen ein und passt sich den Rundheiten des Loches an. Die Formgenauigkeiten des Loches und auch das Übermaß übertragen sich nahezu vollständig auf die Geometrie der Laufbahnen. da das Gehäuse des Trägers im Vergleich zum Außenring starr ist.

Das Loch in dem vergleichsweise zu dem Außenring starren Radträger weist, wenn das Radlager in dem Loch sitzt, im Wesentlichen die Ausgangsgeometrie vor dem Einpressen des Radlagers auf. Die funktionsbedingten Rundheiten an der Laufbahn sind an dem Außenring somit erst dann hergestellt, wenn der Außenring in das Loch eingepresst ist. Außerdem ist die elastische Formänderung u. a. auch für die notwendige Spielfreiheit der Radlagerung vorteilhaft, wenn das Radlager komplett als Einheit montiert wird.

Der Außenring ist mit dem Flansch vorzugsweise einteilig ausgebildet, der Flansch kann aber auch an dem Außenring durch Schweißen oder durch einen kraftschlüssigen und/oder formschlüssigen Sitz befestigt sein. Eine Ausgestaltung der Erfindung sieht vor, dass der Außenring aus umgeformten Material gebildet ist. Die Gestalt des Außenringes mit allen seinen Formelementen ist demnach auch durch Umformen hergestellt. Trennende oder spanabhebende Bearbeitung ist nur auf einen sehr geringen Umfang der Bearbeitung im Vergleich zum Umfang der spanlosen Bearbeitung begrenzt. So sind durch Trennen bzw. Lochen nur überschüssiges Material, Ränder, Grate oder weiter Ähnliches vom Formteil entfernt. Spanabhebend sind gegebenenfalls nur die Laufbahnen durch Feinbearbeitung wie Schleifen, Läppen oder Polieren nachgearbeitet. Unter dem Begriff Kaltumformen sind alle die Umformverfahren, zu verstehen, bei denen die Kontur des hohlen Außenringes durch Dehnen oder Stauchen, Aufweiten bzw. Einschnüren und dabei plastische Formänderung des Ausgangsmateriales ohne Werkstofftrennung herstellbar sind. Derartige Verfahren sind z. B. Ziehen, Tiefziehen, Rollieren, Pressen und Kombinationen der vorgenannten Verfahren.

Als Rohlinge für die Herstellung der Außenringe sind z. B. Rohre und Bleche vorgesehen. Ein Rohling aus einem Rohr ist durch Aufweiten, Rollieren, Einschnüren, Stauchen und Umlegen von Rändern zu dem fertigen Außenring bearbeitet. Aus Blech hergestellte Außenringe sind durch Ziehen und weitere einzelne bzw. Kombinationen der vorgenannten Verfahren hergestellt. In diesem Fall sieht eine Ausgestaltung der Erfindung vor, dass der Flansch axial von der Stirnseite des Außenringes bis an den Radträger, an dem der Flansch anliegt, genauso breit ist wie das Ausgangsmaterial des Bleches vor dem Herstellen des Außenringes dick war. Bevorzugte Werkstoffe sind kaltformbare Lagerwerkstoffe wie z. B. 100Cr6 oder auch alle geeigneten Tiefziehstähle.

Der Außenring ist aufgrund einer als Entlastungskehle wirkenden Ringnut in Lastrichtung der Wälzkörper elastisch und hoch belastbar. Jeweils eine Schulter ist dazu wahlweise radial in Stützrichtung mit einer derartigen Ringnut versehen. Weiterhin zeichnet sich der Außenring durch ein geringes Gewicht aus, da Ausgangsmaterial geringer Wandstärke bzw. geringer Blechdicke eingesetzt ist. Die Stärke bzw. Dicke des Ausgangsmateriales liegt vorzugsweise im Bereich von 2, 4 bis 5 mm. Mit dem dünnwandigen Außenring aus spanabhebender oder spanloser Herstellung ist der Gesamtanteil der Radlagereinheit an dem Gewicht der ungefederten Massen reduziert.

Der Flansch ist vorzugsweise mit Bolzen, die zum Beispiel in den Radträger eingeschraubt oder eingepresst werden, an dem Radträger befestigt. Denkbar sind auch anderer Befestigungselemente, wie Klammern oder ähnliches die den Flansch an einer von dem Radträger axial abgewandten Seite des Flansches an wenigstens einem Befestigungsrand axial hintergreifen. Alternativ dazu, sind an dem Radträger durch Schweißen oder Einschrauben befestigte Bolzen vorgesehen, auf die jeweils eine Mutter aufgeschraubt und gegen den Flansch axial vorgespannt ist. Die Bolzen durchgreifen axiale Ausnehmungen an dem Flansch.

Es sind mit der Erfindung verschiedene Ausgestaltungen des Flansches vorgesehen. Es ist vorgesehen, dass Flansch außen durch eine zylindrische Mantelfläche begrenzt ist. Ein andere Ausgestaltung sieht einen Flansch mit radial hervorstehenden sowie umfangsseitig zueinander benachbarten Abschnitten vor. In wenigstens zwei der Abschnitte erstreckt sich jeweils eine der Ausnehmungen radial zumindest teilweise. Alternativ dazu sind die Ausnehmungen umfangsseitig zwischen den Abschnitten ausgebildet.

Der Flansch weist die Ausnehmungen in Form von axialen Löchern , alternativ, anstelle von Durchgangslöchern, axial durch den Flansch hindurchgehende sowie radial nach außen offene Ausnehmungen für die Befestigung des Flansches an einem Radträger auf. Die Befestigungselemente durchgreifen jeweils eine der Ausnehmungen axial von dem Radträger aus und hintergreifen dann den Flansch am Rand der Ausnehmungen. Der Gewichtsanteil am Gesamtgewicht des Flansches ist somit erheblich reduziert, da das Material eines die Ausnehmungen üblicherweise außen umschließenden Ringabschnittes des Flansches entfällt. Die Ausnehmungen sind, aber auch radial nach außen offene Ausnehmungen.

Eine Ausgestaltung der Erfindung sieht vor, dass die Kontur der nach außen offenen Ausnehmungen kreisbogenförmig verläuft. Es ist sind aber alternativ auch sich radial von außen schlitzartig in Richtung der Rotationsachse des Radlagers erstreckende Ausnehmungen vorgesehen.

Bei der Herstellung eines derartigen Flansches wird zum Beispiel der zunächst mit Durchgangslöchern versehene Flansch von außen solange spanabhebend bearbeitet, bis der überflüssige, die Löcher radial außen begrenzende Anteil an Material von dem Flansch entfernt ist. Alternativ dazu, wird die erfindüngsgemäße Kontur des Flansches durch Stanzen erzeugt. Das ist insbesondere dann von Vorteil, wenn der Außenring kalt geformt ist. Eine spanabhebende Entfernen des Randes ist somit überflüssig. Die Ausnehmungen und auch die übrigen radial von außen zugänglichen Abschnitte des Flansches weisen in diesem Fall einen Stanzrand aus einem Stanzvorgang zum Schneiden wenigstens der Ausnehmungen aufweisen.

Der Flansch liegt an dem Radträger vorzugsweise nur abschnittweise axial an. Dabei liegt der Außenring mit einem hohlzylindrischen Abschnitt radial und mit dem Flansch axial so an, dass der Radträger die konkaven Kehle, an der der Flansch in den Abschnitt übergeht, nicht anliegt. Die konkave Kontur der Kehle geht dabei, in einem Längsschnitt durch den Außenring entlang der Rotationsachse des Außenringes betrachtet, an einem ersten Übergang beispielsweise in eine Kreisringfläche des Flansches und an einem zweiten Übergang z.B. in eine zylindrische Mantelfläche des Abschnittes über. Der erste und der zweite Übergang enden alternativ dazu zum Beispiel jeweils in einer freistichartig geformten Ringnut in dem Flansch bzw. in dem Abschnitt. Dabei ist von besonderer Bedeutung, das ein senkrechte Abstand zwischen einer gedachten axialen Verlängerung der Mantelfläche des Flansches und dem ersten Übergang kleiner ist als ein zur Rotationsachse paralleler Abstand zwischen einer gedachten radialen Verlängerung der Mantelfläche und dem zweiten Übergang.

Anhand von Versuchen wurde nachgewiesen, dass sich durch diese Gestaltung der Kontur die maximale Kerbspannung in der Kehle durch um ca. 30% reduzieren lässt. Die Kehle ist dabei vorteilhaft durch wenigstens zwei aufeinander folgende Radien zwischen den Übergängen beschrieben. wobei wenigstens ein erster Radius radial an dem Übergang in den Flansch und wenigsten ein zweiter Radius axial an dem Übergang in den ersten Abschnitt übergeht. Die Radien sind in dem Längsschnitt in Richtung der Übergänge entweder durch eine Gerade voneinander getrennt, oder gehen vorzugsweise zwischen dem Flansch und dem Abschnitt ineinander übergehen.

Der Außenring ist zumindest abschnittsweise wenigstens radial zur Rotationsachse in dem Radträger so abgestützt, dass der axial endseitig des Außenringes ausgebildete Flansch axial an dem Radträger und radial an dem Außenring anliegt, ohne dass der Träger Kontakt zur Kehle hat. Zusätzliche Spannungen in der Kehle durch den Einfluss von scharfen Kanten des Trägers ist auch durch eine ausreichend dimensionierte Fase an dem Loch vermieden.

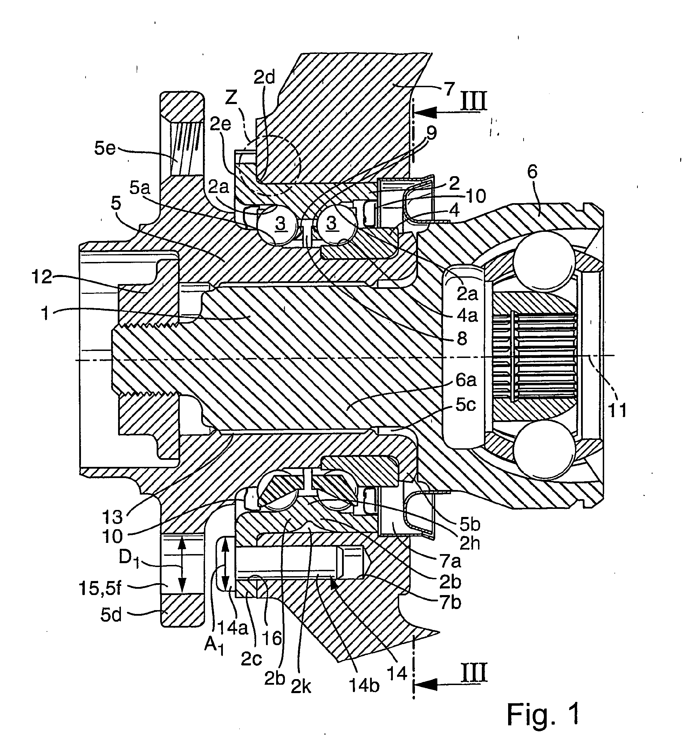

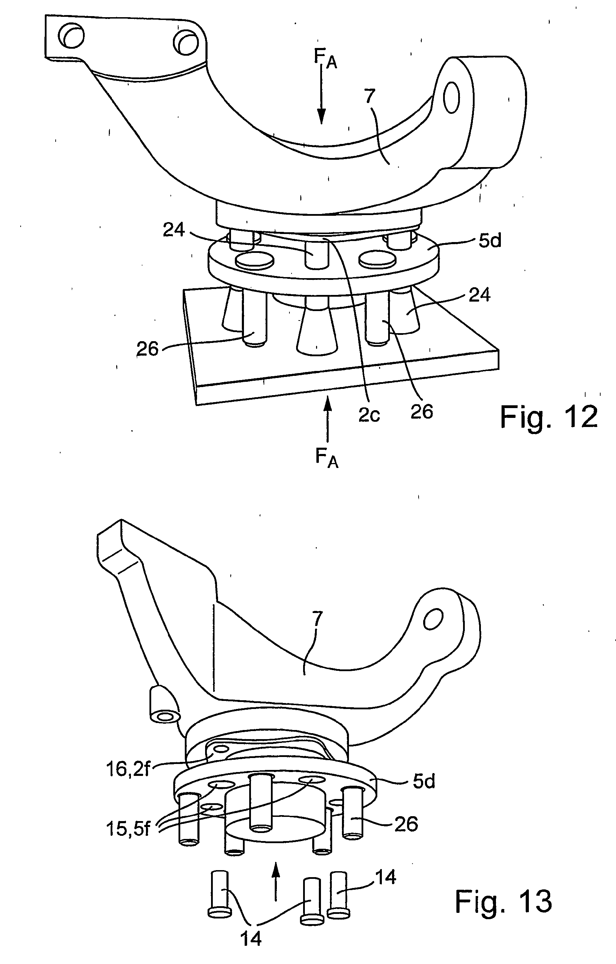

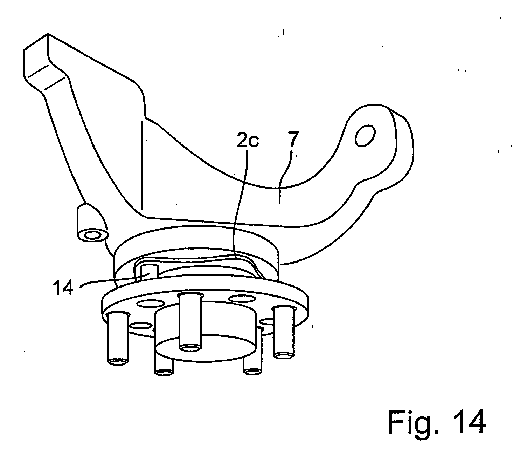

Weitere Ausgestaltungen sowie Ausführungsform der Erfindung der Erfindung in den Figuren 1 bis 14 näher beschrieben.

### Detaillierte Beschreibung der Zeichnungen

Figur 1 zeigt ein Radlagermodul 1 in einem Längsschnitt entlang einer Rotationsachse 11. Das Radlagermodul ist mit einem Außenring 2, mit zwei Reihen Wälzkörper 3, mit einem Innenring 4, mit einer Nabe 5 und mit einer Gelenkglocke 6 versehen. Die aus den Einzelteilen 2, 3, 4, 5, 6 vormontierte Baueinheit des Radlagermoduls sitzt in einem Radträger 7.

Das Radlager 8 aus dem Außenring 2, den Wälzkörpern 3, in diesem Beispiel in Form von Kugeln, aus Käfigen 9, Dichtungen 10, dem Innenring 4 und aus der Nabe 5 ist in sich selbst haltend vormontiert. Dazu sind die Wälzkörper 3 und der Innenring 4 mittels der Nabe 5 in dem Außenring 2 gehalten. Eine Reihe der Wälzkörper 3 stützt sich dabei an einer Laufbahn 2a des Außenringes 2 und an einer direkt an der Nabe 5 ausgebildeten Laufbahn 5a ab. Die andere Reihe der Wälzkörper 3 ist zwischen einer weiteren Laufbahn 2a und einer Laufbahn 4a des Innenringes 4 angeordnet. Das Radlager 8 ist mittels eines Bördelbordes 5b an der Nabe 5 über den Innenring 4 und den Außenring 2 spielfrei vorgespannt - zumindest dann, wenn das Radlager 8 in dem Radträger 7 montiert ist. Die Nabe 5 ist über den Bördelbord 5b unlösbar zum Radlager 8 fest.

Die Nabe 5 ist um eine Rotationsachse 11 im wesentlichen rotationssymmetrisch ausgebildet und weist ein axiales Durchgangsloch 5c auf. Ein Stummel 6a an der Gelenkglocke 6 durchgreift das Durchgangsloch 5c axial. Die Gelenkglocke 6 ist über eine Mutter 12 axial an der Nabe 5 gesichert. An der Nabe 5 ist ein radial nach außen weisender Radflansch 5d ausgebildet. Über Zahnprofile 13 an dem Stummel 6a sowie an der Nabe 5 ist eine um die Rotationsachse 11 drehfeste Verbindung zwischen der Gelenkglocke 6 und dem Radflansch 5d hergestellt.

An dem Radflansch 5d sind axiale Löcher 5e ausgebildet, in die nicht dargestellte Radbolzen zur Befestigung eines Fahrzeugesrades eingreifen. Weiterhin weist der Radflansch 5d axiale Ausnehmungen 5f auf, die zumindest einmal pro Umdrehung des Radflansches 5d um die Rotationsachse 11, einem Flansch 2c axial so gegenüber liegen, dass der Radflansch 5d aufgrund der Ausnehmungen 5f das Befestigungselement 14 axial nicht verdeckt. Der Durchmesser D₁ der als axiales Durchgangsloch 15 ausgeführten Ausnehmung 5f ist größer als die größte radiale Abmessung A₁ des Kopfes 14a.

Der Außenring 2 ist aus zwei hohlzylindrischen Abschnitten 2b und aus dem radialen Flansch 2c gebildet. Das Radlager 8 ist über die Abschnitte 2b in einem Loch 7a des Radträgers 7 radial abgestützt. Der Außenring 2 geht an einem der Abschnitte 2b über eine Kehle 2d radial in den Flansch 2c über. Der Flansch 2c liegt axial außen an dem Radträger 7 an und ist an der von dem Radträger 7 axial abgewandten Seite 2e von den Befestigungselementen 14 in Form von Bolzen hintergriffen. Das Befestigungselement 14 ist mit dem Kopf 14a axial fest gegen den Flansch 2c vorgespannt, da ein an dem Bolzen fester Schaft 14b axial in einem Befestigungsloch 7b des Radträgers 7 fest ist. Die Befestigungselemente 14 sind in die Befestigungslöcher 7b wahlweise eingepresst bzw. eingeschraubt. ,

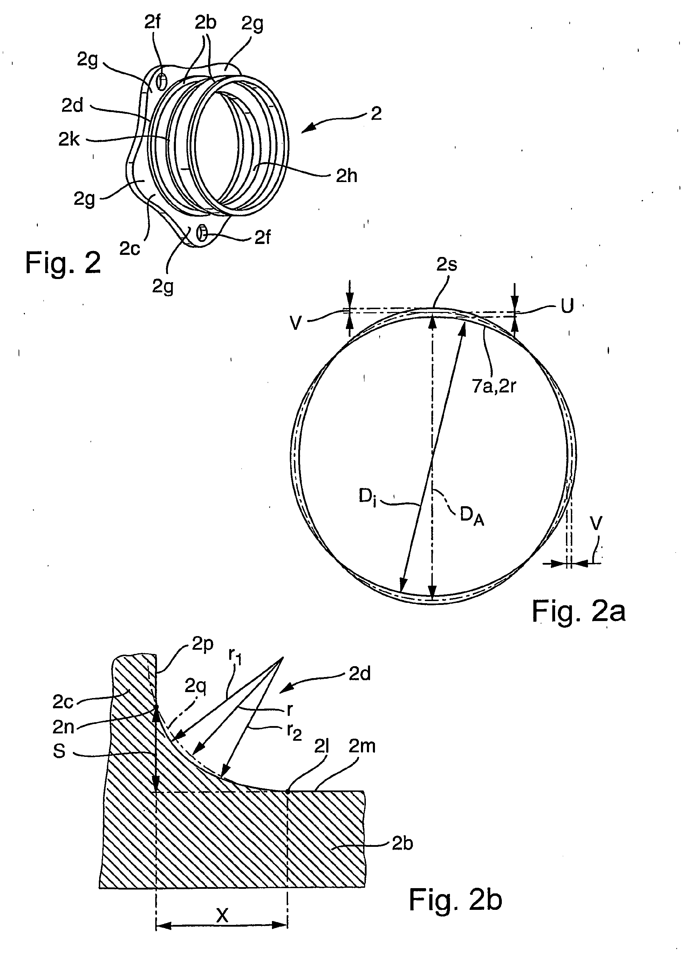

Figur 2 zeigt den Außenring 2 in einer Vollansicht. Der Außenring 2 ist ein durch Kaltumformen hergestelltes Bauteil, dessen Flansch 2c radial hervorstehende Abschnitte 2g aufweist. In drei der Abschnitte 2g sind die Außennehmungen 2f als axiale Durchgangslöcher 16 eingebracht.

In Figur 2a zeigt die Formabweichungen des Außenringes 2 als Einzelteil im Vergleich zu der Innengeometrie 2r des Loches 7a. Der Außenring 2 weist aufgrund seiner dünnen Wand nach dem Kaltumformen eine Außengeometrie 2r auf, deren Durchmesser D_{A} zunächst um das Übermaß 2 x U größer ist als der Innendurchmesser D_{I} des Loches 7a. Zusätzlich weicht die Außengeometrie 2s um das Maß 2 x V von der Innengeometrie 2r des Befestigungsloches 7b ab. Nach der Montage des Außenringes 2 in das Loch 7a ist der Außenring 2 soweit eingeschnürt, dass die Außengeometrie 2s dem Durchmesser D_{I} und der Innengeometrie 2r im wesentlichen entspricht. I

Der Außenring 2 weist eine Radialschulter 2h auf. Die Radialschulter 2h ist zwischen den Laufbahnen 2a angeordnet, wobei die Laufbahnen 2a zumindest teilweise an der Radialschulter 2h ausgebildet sind. In den Außenring 2 ist radial von außen eine Ringnut 2k eingebracht. Die Ringnut 2k ist zum einen durch das Verdrängen von Material aus dem Außenring 2 zum Formen der Radialschulter 2h entstanden und verleiht zum anderen dem Außenring 2 im Bereich der Laufbahnen 2a eine gewisse Elastizität. Die Schulter ist, alternativ zu einer Ringnut in der Schulter, vollständig durch das Material des Außenringes unterstützt.

In Figur 2b, einer vergrößerten Darstellung des Details Z aus Figur 1, ist die Kehle 2d stark vergrößert und nicht maßstäblich dargestellt. Die Kehle 2d ist konkav ausgebildet und geht an einem ersten Übergang 2l in eine kreiszylindrische, Mantelfläche 2m des Abschnittes 2b über. An dem Flansch 2c geht die Kehle 2d an dem Übergang 2n in eine kreisringförmige Fläche 2p über. Der senkrechte Abstand S zwischen der gedachten axialen Verlängerung der Mantelfläche 2m und dem Übergang 2n ist kleiner als ein zur Rotationsachse 11 paralleler Abstand X zwischen einer gedachten radialen Verlängerung der Kreisringfläche 2p und dem Übergang 2l.

Figur 2b zeigt auch, dass die Kontur der Kehle 2d in einem Längsschnitt, durch den Außenring 2 von einer mit Strichpunktlinien dargestellten und durch einen Radius r beschriebenen Kontur 2q abweicht. Die Kehle 2d ist in dem Längsschnitt die Radien r₁ und r₂ beschrieben. Der Radius r₁ geht an dem Übergang 2n in den Flansch 2 und der Radius r₂ geht axial an dem Übergang 2l in den Abschnitt 2b über. Die Radien r₁ sowie r₂ gehen zwischen dem Flansch 2c und dem Abschnitt 2b ineinander über.

Der Radträger 7 liegt axial so an dem Flansch 2c und radial an dem Abschnitt 2b so an, dass der Radträger 7 und die Kehle 2d mindestens bis zu den Übergängen 2l und 2n zueinander beabstandet sind. Die Maximalspannungen radial unterhalb der Ausnehmungen 2f sind an der durch den Radius r beschriebenen Kontur 2q etwas um ein Drittel höher als die Spannungen in einer Kehle 2c, die durch die Radien r₁ und r₂ beschrieben ist.

Der Radflansch 5d liegt dem Flansch 2c axial gegenüber und steht radial weiter hervor als der Flansch 2c (Figur 1), so dass der Flansch 2c zunächst von dem Radflansch 5d zunächst axial in Richtung des Radträgers 7 verdeckt ist.

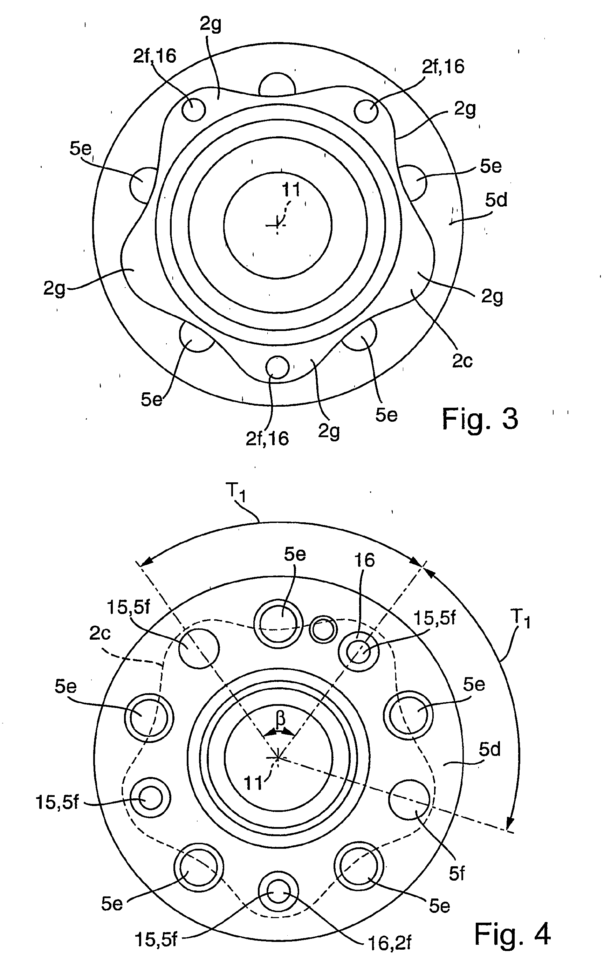

Figur 3 und Figur 4 zeigen das Radlagermodul 1 in verschiedenen Frontalansichten. In Figur 3 ist das Radlagermodul 1, ohne Gelenkglocke und ohne Radträger, entlang der Linie III - III in die mit den Pfeilen markierte Richtung nach Figur 1 abgebildet. In Figur 4 ist das Radlagermodul 1 in einer zu Figur 3 entgegengesetzten Ansicht mit Sicht auf den Radflansch 5d in Richtung des Radträgers 7 dargestellt. Insbesondere aus Figur 4 ist ersichtlich, dass der Radflansch 5d axial in Richtung des Radträgers den Flansch 2c am Außenring 2 vollständig verdeckt - jedoch liegt jeweils eine der Außennehmungen 5f, zeitgleich zu den anderen Ausnehmungen 5f, an dem Radflansch 5d einmal pro Umdrehung des Radflansches 5d um die Rotationsachse 11 so axial gegenüber, dass der Radflansch 5d den Flansch 2c an den Ausnehmungen 2f und an den Rändern der Ausnehmungen 2f axial nicht verdeckt.

Unter den Rändern die Ausnehmung ist der sich den Ausnehmungen anschließende Bereich zu verstehen, an dem die Befestigungselemente an dem Flansch anliegen. Die Ausnehmungen 5f sind deshalb mindestens so groß gestaltet, dass das Befestigungsmittel 14 mit Kopf und auch ein die Befestigungsmittel 14 am Kopf 14a umgreifendes Werkzeug axial durch die Ausnehmungen 5f geführt werden kann.

Die Ausnehmungen 5f sind mit gleicher Teilung T₁ um die Rotationsachse 11 zueinander verteilt, wobei die Teilung T₁ durch den Winkel β in diesem Falle β = 72°, vorgegeben ist.

Die Löcher 5e in dem Radflansch 5d sind jeweils mit einem Innengewinde 5g versehen (Fig. 1), in das die Radbolzen eingeschraubt werden. Es ist denkbar, Löcher 5e ohne Innengewinde gleichzeitig für den axialen Zugriff auf die Löcher 16 zu nutzen. Dies ist deshalb möglich, da ein alle Löcher 15 außen umfassender Außenhüllkreis größer ist als ein alle Löcher 16 außen umgreifender Außenhüllkreis und ein an allen Löchern 15 innen anliegender Hüllkreis kleiner ist als ein an allen Löchern 16 anliegender Innenhüllkreis.

Die Anzahl der Ausnehmungen 5f am Radflansch 5 (in diesem Fall 5 Stück) ist größer als die Anzahl der Ausnehmungen (in diesem Falle 3 Stück) 2f an dem Flansch 2c. Die Anzahl der Ausnehmungen kann aber auch übereinstimmen.

Wie aus Figur 4 ersichtlich ist, liegt jede der überzähligen Ausnehmungen 5f in einem der Abschnitte 2g ohne Löcher 16 zeitgleich zu den anderen Ausnehmungen 5f axial gegenüber. Diese beiden Abschnitte 2g, die ohne die Ausnehmung 2f sind, wie insbesondere aus Figur 3 ersichtlich ist, sind für die Anlage von Axialstützen für den Flansch 2 beim Erpressen in das Loch 7a des Radträgers vorgesehen. Dabei durchgreifen die Axialstützen axial zwei der Ausnehmungen 5f.

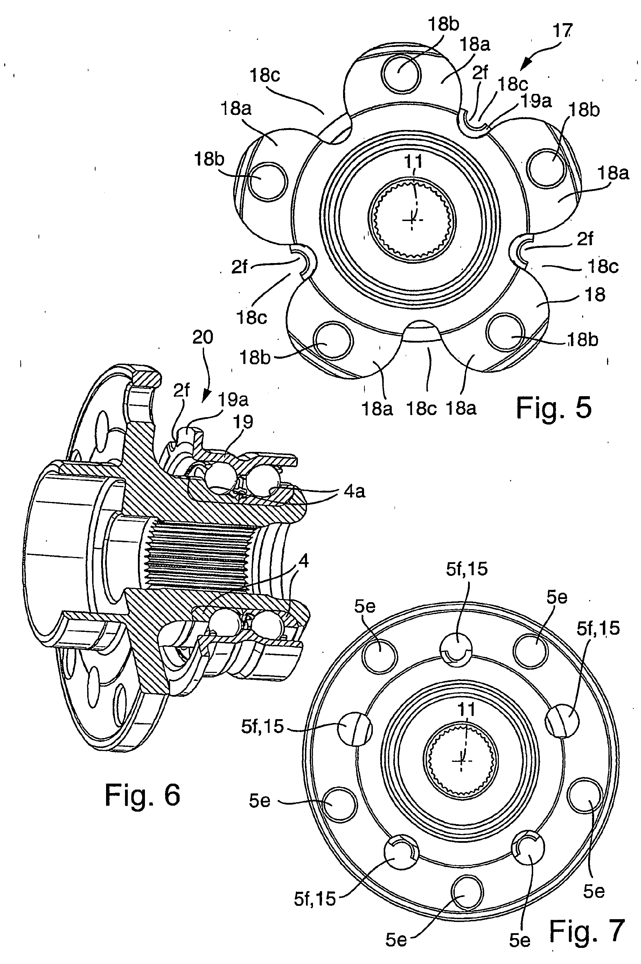

Figur 5 zeigt ein Radlager 17 mit einem Radflansch 18. Radial hervorstehende Abschnitte 18a des Flansches weisen axiale Löcher 18b auf, in die nicht dargestellte Radbolzen zur Befestigung eines Fahrzeugrades eingreifen. Zwischen jeweils zwei umfangsseitig zueinander benachbarten der Abschnitte 18a ist jeweils eine der erfindungsgemäßen Ausnehmungen 18c nach außen offen an dem Radflansch ausgebildet. Der Flansch 19a weist anstelle von axialen Durchgangslöchern radial nach außen offene kreisbogenförmige Ausnehmungen 2f auf. Der Radflansch 18 ist gegenüber dem Flansch 19a so in Position um die Rotationsachse 11 gedreht, dass die Ausnehmungen 2f in axiale mit der Rotationsachse 11 gleich gerichtete Richtung nicht von dem Radflansch 18 verdeckt sind.

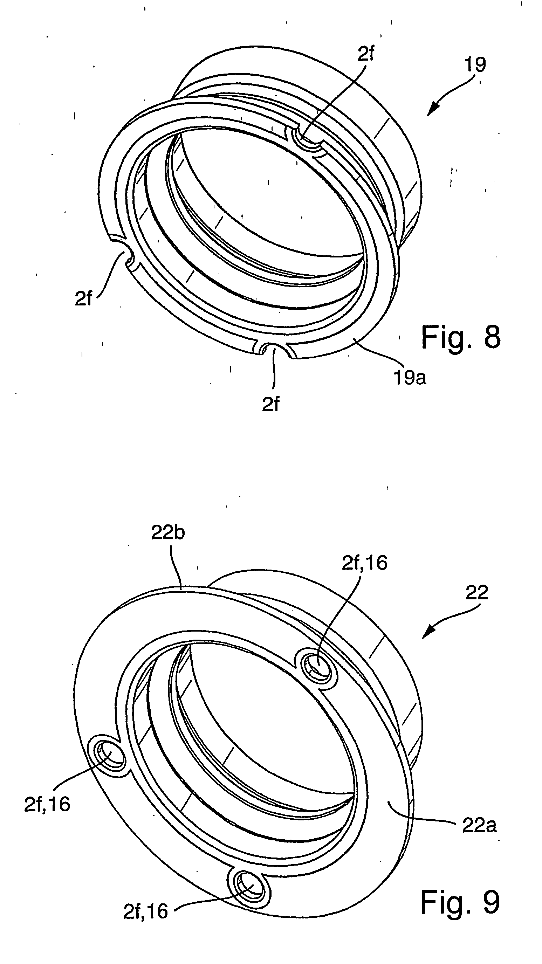

Figur 6 zeigt ein Radlager 20 für ein nicht angetriebenes Fahrzeugrad, in dem wahlweise verschiedene Radflansche gelagert sein können, mit einem Außenring 19 aus spanloser Herstellung. Der Außenring 19 ist in Figur 8 als Einzelteil in einer Gesamtansicht dargestellt und weist den radialen Flansch 19a mit den kreisbogenförmig ausgebildeten Ausnehmungen 2f auf. Das Radlager 20 weist zwei der Innenringe 4 auf, an denen jeweils eine der Laufbahnen 4a ausgebildet ist.

Figur 7 zeigt einen Radflansch, bei dem die als Löcher 15 ausgebildeten Ausnehmungen 5f radial näher zur Rotationsachse 11 liegen als die Löcher 5e zur Aufnahme der Radbolzen. Sowohl die Löcher 15 als auch die Löcher 5e sind mit der gleichen Teilung umfangsseitig zur Rotationsachse 11 verteilt.

Die Figur 9 zeigt einen durch Umformen hergestellten Außenring 22 mit einem Flansch 22a. In dem Flansch 22a sind die axialen Ausnehmungen 2f wieder als axiale Löcher 16 ausgebildet. Der Flansch 22a ist außen durch eine Kreisringfläche 22b begrenzt. Die zuvor beschriebenen Flansche an den Außenringen weisen einen Stanzrand auf, der beim Beschneiden der Flansche nach dem Kaltumformen der Außenringe entsteht.

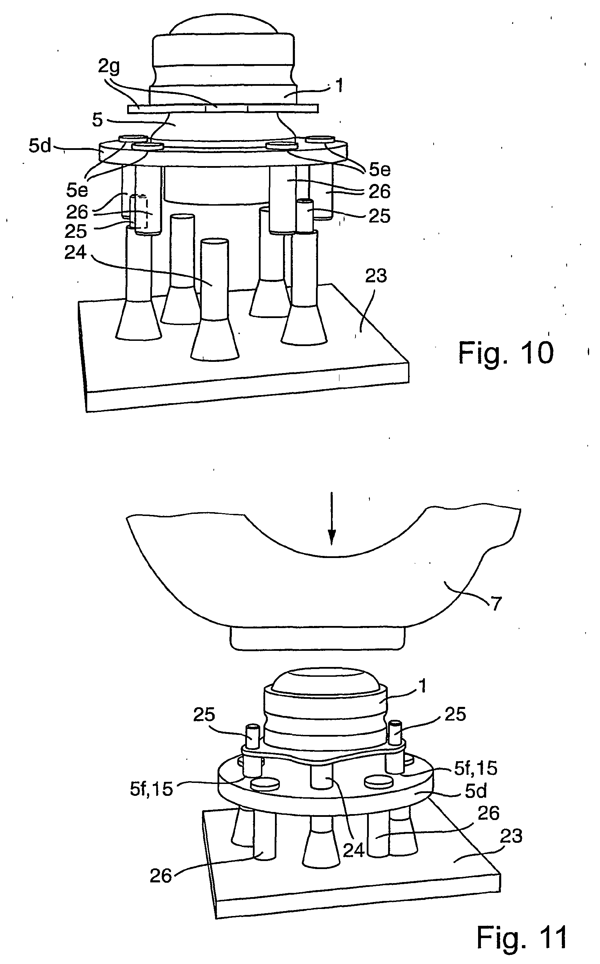

Die Figuren 10 bis 14 beschreiben die einzelnen Schritte des erfindungsgemäßen Verfahrens zur Montage des Radlagermoduls 1 in den Träger 7. Figur 10 zeigt eine Vorrichtung 23 mit Axialstützen 24 und Zentrierbolzen 25. Das Radlagermodul 1 wird zu der Vorrichtung 1 ausgerichtet, so dass die Ausnehmungen 2f und 5f gemäß der Darstellung nach Figur 3 und Figur 5 axial einander gegenüber liegen. In den Löchern 5e sind Radbolzen 26 aufgenommen. Die Axialstützen 24 liegen dabei den Abschnitten 2g ohne Löcher axial gegenüber.

In der Darstellung nach Figur 11 ist der zweite Verfahrensschritt beendet, bei dem die Axialstützen 24 und die Zentrierbolzen 25 in die jeweiligen Ausnehmungen 5f axial eingeführt sind und so schließlich durch die ersten Ausnehmungen 5f axial hindurch greifen. Die Axialstützen 24 durchgreifen dabei die überzähligen der Ausnehmungen 5f axial und liegen an den Abschnitten 2g ohne Ausnehmungen 2f des Flansches 2c an. Außerdem liegt der Flansch 2c auch noch axial an den Zentrierbolzen an. Der Radträger 7 wird zum Radlagermodul 1 ausgerichtet und in Pfeilrichtung axial auf das Radlagermodul 1 zugeführt.

In Figur 12 ist der Schritt - axiales Einpressen - des Radlagermoduls 1 mittels der Einpresskräfte F_{A} beendet. Dabei stützt sich der Flansch 2c an den Axialstützen 24 ab. Die Enden der Zentrierbolzen tauchen in die Befestigungslöcher des Radflansches 7 ein.

Figur 13 zeigt das über den Außenring 2 in dem Radträger 7 sitzende Radlagermodul 1 und die Befestigungselemente 14 in Form von Bolzen. Die Befestigungselemente 14 sind auf die axial vor den Ausnehmungen 2f liegenden Ausnehmungen 5f ausgerichtet, werden durch diese in Pfeilrichtung axial hindurch geführt und schließlich durch die Löcher 16 hindurch an dem Radträger 7 befestigt.

Figur 14 zeigt die fertig montierte Einheit in einer Gesamtansicht. Der Außenring 2 ist mit den Befestigungselementen 14 axial am Radträger gesichert.

### Bezugszeichen

- 1: Radlagermodul
- 2: Außenring
- 2a: Laufbahn
- 2b: Abschnitt
- 2c: Flansch
- 2d: Kehle
- 2e: Seite
- 2f: Ausnehmung
- 2g: Abschnitt
- 2h: Radialschulter
- 2k: Ringnut
- 2l: Übergang
- 2m: Mantelfläche
- 2n: Übergang
- 2p: Fläche
- 2q: Kontur
- 2r: Innengeometrie
- 2s: Aussengeometrie
- 3: Wälzkörper
- 4: Innenring
- 4a: Laufbahn
- 5: Nabe
- 5a: Laufbahn
- 5b: Bördelbord
- 5c: Durchgangsloch
- 5d: Radflansch
- 5e: Löcher
- 5f: Ausnehmung
- 6: Gelenkglocke

- 6a: Stummel
- 7: Radträger
- 7a: Loch
- 8: Radlager
- 9: Käfige
- 10: Dichtung
- 11: Rotationsachse
- 12: Mutter
- 13: Zahnprofil
- 14: Befestigungselement
- 14a: Kopf
- 14b: Schaft
- 15: Loch
- 16: Loch
- 17: Radlager
- 18: Radflansch
- 18a: Abschnitt
- 18b: Loch
- 19: Außenring
- 19a: Flansch
- 20: Radlager
- 21: Radflansch
- 22: Außenring
- 22a: Flansch
- 22b: Kreisringfläche
- 23: Vorrichtung
- 24: Axialstützen
- 25: Zentrierbolzen
- 26: Radbolzen

## Patentansprüche

1. Radlagermodul (1) in einem Radträger (7), mit einem Radlager (8) und mit einem Radflansch (5d), wobei de Radflansch (5d) mittels des Radlagers (8) um eine Rotationsachse (11) drehbar zu dem Radträger (7) gelagert ist, wobei das Radlager (8) zumindest einen Außenring (2) aufweist und zumindest abschnittsweise über den Außenring (2) zumindest radial zur Rotationsachse (11) in dem Radträger (7) abgestützt ist, wobei der Außenring (2) einen radial von der Rotationsachse (11) wegweisenden Flansch (2c) aufweist, welcher Flansch (2c) axial mit Befestigungselementen (14) zu dem Radträger (7) fest ist, wobei das Befestigungselement (14) den Flansch (2c) an einer von dem Radträger (7) axial abgewandten Seite des Flansches (2c) wenigstens teilweise hintergreift und dabei das Befestigungselement (14) axial fest an dem Flansch (2c) anliegt, wobei der Radflansch (5d) dem Außenring (2) axial gegenüberliegt und von der Rotationsachse (11) weg zumindest abschnittsweise weiter radial hervorsteht als der Flansch (2c), sowie der Radflansch (5d) axial durch den Radflansch (5d) hindurchführende erste Ausnehmungen (5f) aufweist, wobei wenigstens eine der ersten Ausnehmungen (5f) dem Flansch (2c) zumindest einmal pro Umdrehung des Radflansches (5d) um die Rotationsachse (11) so axial gegenüberliegt, dass der Radflansch (5d) den Flansch (2c) wenigstens da, wo das Befestigungselement (14) an dem Flansch (2c) axial anliegt, axial nicht verdeckt, wobei an dem Flansch (2c) axiale zweite Ausnehmungen (2f) ausgebildet sind, wobei das Befestigungselement (14) die zweiten Ausnehmungen (2f) axial durchgreift, **dadurch gekennzeichnet, dass** der Flansch (2c) axial endseitig des Außenrings (2) angeordnet ist und das Radlagermodul (1) mehr erste Ausnehmungen (5f) als zweite Ausnehmungen (2f) aufweist.

2. Radlagermodul nach Anspruch 1, bei dem die ersten Ausnehmungen (5f) zumindest einmal pro Drehung des Radflansches (5d) um die Rotationsachse (11), und dabei zeitgleich zueinander, jeweils dem Flansch (2c) axial so gegenüberliegen, dass der Radflansch (5d) den Flansch (2c) da, wo die Befestigungselemente (14) anliegen, in axiale Richtung nicht verdeckt.

3. Radlagermodul nach Anspruch 1, bei dem die ersten Ausnehmungen (5f) um die Rotationsachse (11) mit gleicher Teilung zueinander beabstandet sind.

4. Radlagermodul nach Anspruch 1, bei dem die ersten Ausnehmungen (5f) radial nach außen offen sind.

5. Radlagermodul nach Anspruch 1, bei dem die ersten Ausnehmungen (5f) axial durch den Radflansch (5d) hindurchführende Löcher sind.

6. Radlagermodul nach Anspruch 1, bei dem die zweiten Ausnehmungen (2f) radial nach außen offen sind.

7. Radiallager nach Anspruch 1, bei dem die zweiten Ausnehmungen (2) axiale Durchgangslöcher (16) sind.

8. Radlagermodul nach Anspruch 1, bei dem an dem Radträger (7) Bolzen fest sind und dass an jedem der Bolzen mindestens eines der Befestigungselemente (14) fest ist.

9. Radlagermodul nach Anspruch 1, bei dem die Befestigungsmittel Köpfe (14a) von Bolzen sind.

10. Radlagermodul nach Anspruch 1, bei dem der Flansch (2c) an dem Radträger (7) zumindest abschnittweise axial anliegt.

11. Radlager nach Anspruch 1, bei der Radträger (7) wenigstens zwei Laufbahnen (2a) des Außenringes (2) umgreift, wobei in dem Außenring (2) eine Nabe (5) über wenigstens zwei Reihen Wälzkörper (3) an den Laufbahnen (2a) um die Rotationsachse (11) drehbar abgestützt ist und wobei der Radflansch (5d) radial von der Nabe (5) abgeht.

12. Radlagermodul nach Anspruch 1, bei dem die Nabe (5) axial unlösbar zu dem Außenring (2) in dem Radlager (8) gelagert ist.

13. Radlagermodul nach Anspruch 1, bei dem der Außenring (2) einteilig kalt umgeformt ist.

14. Verfahren zur Montage des Radlagermoduls (1) nach Anspruch 1, bei dem das Radlager (8) mit einer Nabe (5) und dem Radflansch (5d) als Einheit in den Radträger (7) montiert und an dem Radträger (7) befestigt wird, das Verfahren mit den Verfahrensschritten:
- Ausrichten der ersten Ausnehmungen (5f) und der zweiten Ausnehmungen (2f) durch Verdrehen der Flansche (2c, 5d) gegeneinander, so dass die ersten Ausnehmungen (5f) zeitgleich zueinander, jeweils wenigstens einem der zweiten Ausnehmungen (2f) axial so gegenüberliegen, dass der Radflansch (5d) zweiten Ausnehmungen (2f) in axiale Richtung nicht verdeckt,
- Einführen von Zentrierbolzen (25) in die zweiten Ausnehmungen (2f), wobei die Zentrierbolzen (25) axial durch mindestens zwei der ersten Ausnehmungen (5f) hindurch greifen,
- axiales Abstützen des Flansches (2) an den Zentrierbolzen (25) gegen axiale Einpresskräfte, wobei die Zentrierbolzen (25) axial durch die ersten Ausnehmungen (2f) hindurch greifen bis der Flansch (2c) an den Zentrierbolzen (25) abgestützt ist,
- Einführen der Zentrierbolzen in Befestigungslöcher (7b) des Radträgers (7),
- Axiales Einpressen des Radlagers (8) mittels der Einpresskräfte, wobei der Flansch (2c) axial gegen die axialen Einpresskräfte auf Axialstützen (24) axial abgestützt wird, wobei jeder der Axialstützen (24) den Radflansch (5d) an einer weiteren der ersten Ausnehmungen (5f) axial durchgreift und zu den zweiten Ausnehmungen (2f) beabstandet an dem Flansch (2c) axial anliegt,
- Entfernen der Zentrierbolzen (25) aus den Befestigungslöchern (7b), aus den zweiten Ausnehmungen (2f) und aus den ersten Ausnehmungen (5f)
- Befestigung von Bolzen in den Befestigungslöchern (7b), wobei jeweils ein Befestigungselement 14 als Bolzen axial durch eine der ersten Ausnehmungen (5f) hindurch in die eine zweite Ausnehmung (2f) eingeführt und anschließend in den Befestigungslöchern (7b) so befestigt wird, dass ein Kopf (14a) des Bolzens axial an zumindest einem der Ränder einer der zweiten Ausnehmungen (2f) axial anliegt.

## Claims

1. Wheel bearing module (1) in a wheel carrier (7), having a wheel bearing (8) and having a wheel flange (5d), the wheel flange (5d) being mounted by means of the wheel bearing (8) with respect to the wheel carrier (7) such that it can rotate about a rotational axis (11), the wheel bearing (8) having at least one outer ring (2) and being supported in the wheel carrier (7) at least in sections via the outer ring (2) at least radially with respect to the rotational axis (11), the outer ring (2) having a flange (2c) which points radially away from the rotational axis (11), which flange (2c) is fixed with respect to the wheel carrier (7) axially with fastening elements (14), the fastening element (14) reaching at least partially behind the flange (2c) on a side of the flange (2c) which faces axially away from the wheel carrier (7), and the fastening element (14) bearing axially fixedly on the flange (2c) in the process, the wheel flange (5d) lying axially opposite the outer ring (2) and protruding radially away from the rotational axis (11) at least in sections to a greater extent than the flange (2c), and also the wheel flange (5d) has first recesses (5f) which pass axially through the wheel flange (5d), at least one of the first recesses (5f) lying axially opposite the flange (2c) at least once per revolution of the wheel flange (5d) about the rotational axis (11), in such a way that the wheel flange (5d) does not cover the flange (2c) axially at least at that location where the fastening element (14) bears axially against the flange (2c), axial second recesses (2f) being formed on the flange (2c), the fastening element (14) reaching axially through the second recesses (2f), **characterized in that** the outer flange (2c) is arranged axially on the end side of the outer ring (2) and the wheel bearing module (1) has more first recesses (5f) than second recesses (2f).

2. Wheel bearing module according to Claim 1, in which the first recesses (5f) lie in each case axially opposite the flange (2c) at least once per revolution of the wheel flange (5d) about the rotational axis (11), and at the same time as one another in the process, in such a way that the wheel flange (5d) does not cover the flange (2c) in the axial direction at that location where the fastening elements (14) are in contact.

3. Wheel bearing module according to Claim 1, in which the first recesses (5f) are spaced apart from one another around the rotational axis (11) with the same pitch.

4. Wheel bearing module according to Claim 1, in which the first recesses (5f) are open radially to the outside.

5. Wheel bearing module according to Claim 1, in which the first recesses (5f) are holes which pass axially through the wheel flange (5d).

6. Wheel bearing module according to Claim 1, in which the second recesses (2f) are open radially to the outside.

7. Wheel bearing module according to Claim 1, in which the second recesses (2f) are axial through holes (16).

8. Wheel bearing module according to Claim 1, in which bolts are fixed to the wheel carrier (7) and at least one of the fastening elements (14) is fixed to each of the bolts.

9. Wheel bearing module according to Claim 1, in which the fastening means are heads (14a) of bolts.

10. Wheel bearing module according to Claim 1, in which the flange (2c) bears axially against the wheel carrier (7) at least in sections.

11. Wheel bearing module according to Claim 1, in which the wheel carrier (7) reaches around at least two raceways (2a) of the outer ring (2), a hub (5) being supported in the outer ring (2) such that it can rotate about the rotational axis (11) via at least two rows of rolling bodies (3) on the raceways (2a), and the wheel flange (5d) leading radially from the hub (5).

12. Wheel bearing module according to Claim 1, in which the hub (5) is mounted axially nonreleasably with respect to the outer ring (2) in the wheel bearing (8).

13. Wheel bearing module according to Claim 1, in which the outer ring (2) is cold formed in one piece.

14. Method for mounting the wheel bearing module (1) according to Claim 1, in which the wheel bearing (8) is mounted in the wheel carrier (7) with a hub (5) and the wheel flange (5d) as a unit, and is fastened to the wheel carrier (7), the method having the following method steps:
- aligning of the first recesses (5f) and the second recesses (2f) by rotation of the flanges (2c, 5d) with respect to one another, with the result that the first recesses (5f) lie in each case axially opposite at least one of the second recesses (2f) at the same time as one another, in such a way that the wheel flange (5d) does not cover second recesses (2f) in the axial direction,
- insertion of centering bolts (25) into the second recesses (2f), the centering bolts (25) reaching axially through at least two of the first recesses (5f),
- axial supporting of the flange (2) on the centering bolts (25) counter to axial pressing in forces, the centering bolts (25) reaching axially through the first recesses (2f) until the flange (2c) is supported on the centering bolts (25),
- insertion of the centering bolts into fastening holes (7b) of the wheel carrier (7),
- axial pressing in of the wheel bearing (8) by means of the pressing in forces, the flange (2c) being supported axially counter to the axial pressing in forces on axial supports (24), each of the axial supports (24) reaching through the wheel flange (5d) axially at a further one of the first recesses (5f) and bearing axially against the flange (2c) in a manner which is spaced apart from the second recesses (2f),
- removal of the centering bolts (25) from the fastening holes (7b), from the second recesses (2f) and from the first recesses (5f),
- fastening of bolts in the fastening holes (7b), in each case one fastening element (14) being inserted as a bolt axially through one of the first recesses (5f) into a second recess (2f) and subsequently being fastened in the fastening holes (7b) in such a way that a head (14a) of the bolt bears axially against at least one of the edges of one of the second recesses (2f).

## Revendications

1. Module de palier de roue (1) dans un support de roue (7), comprenant un palier de roue (8) et une bride de roue (5d), la bride de roue (5d) étant supportée au moyen du palier de roue (8) de manière à pouvoir tourner autour d'un axe de rotation (11) par rapport au support de roue (7), le palier de roue (8) présentant au moins une bague extérieure (2) et étant supporté au moins en partie par le biais de la bague extérieure (2) au moins radialement par rapport à l'axe de rotation (11) dans le support de roue (7), la bague extérieure (2) présentant une bride (2c) détournée radialement de l'axe de rotation (11), laquelle bride (2c) est fixée axialement au support de roue (7) au moyen d'éléments de fixation (14), l'élément de fixation (14) venant en prise par l'arrière au moins en partie avec la bride (2c) au niveau d'un côté de la bride (2c) opposé axialement au support de roue (7) et l'élément de fixation (14) s'appliquant ainsi axialement fixement contre la bride (2c), la bride de roue (5d) étant opposée axialement à la bague extérieure (2) et faisant saillie au moins en partie radialement à l'écart de l'axe de rotation (11) plus loin que la bride (2c), et la bride de roue (5d) présentant des premiers évidements (5f) passant axialement à travers la bride de roue (5d), au moins l'un des premiers évidements (5f) étant axialement opposé à la bride (2c) au moins une fois par rotation de la bride de roue (5d) autour de l'axe de rotation (11) de telle sorte que la bride de roue (5d) ne couvre pas axialement la bride (2c) au moins là où l'élément de fixation (14) s'applique axialement contre la bride (2c), des deuxièmes évidements axiaux (2f) étant réalisés sur la bride (2c), l'élément de fixation (14) venant en prise axialement à travers les deuxièmes évidements (2f), **caractérisé en ce que** la bride (2c) est disposée axialement du côté de l'extrémité de la bague extérieure (2) et le module de palier de roue (1) présente plus de premiers évidements (5f) que de deuxièmes évidements (2f).

2. Module de palier de roue selon la revendication 1, dans lequel les premiers évidements (5f) sont opposés axialement à chaque fois à la bride (2c) au moins une fois par rotation de la bride de roue (5d) autour de l'axe de rotation (11), et en l'occurrence simultanément les uns par rapport aux autres, de telle sorte que la bride de roue (5d) ne couvre pas la bride (2c) dans la direction axiale là où les éléments de fixation (14) s'appliquent.

3. Module de palier de roue selon la revendication 1, dans lequel les premiers évidements (5f) sont espacés avec le même espacement les uns par rapport aux autres autour de l'axe de rotation (11).

4. Module de palier de roue selon la revendication 1, dans lequel les premiers évidements (5f) sont ouverts radialement vers l'extérieur.

5. Module de palier de roue selon la revendication 1, dans lequel les premiers évidements (5f) sont des trous passant axialement à travers la bride de roue (5d).

6. Module de palier de roue selon la revendication 1, dans lequel les deuxièmes évidements (2f) sont ouverts radialement vers l'extérieur.

7. Module de palier de roue selon la revendication 1, dans lequel les deuxièmes évidements (2f) sont des trous traversants axiaux (16).

8. Module de palier de roue selon la revendication 1, dans lequel des boulons sont fixés sur le support de roue (7) et au moins l'un des éléments de fixation (14) est fixé sur chacun des boulons.

9. Module de palier de roue selon la revendication 1, dans lequel les moyens de fixation sont des têtes (14a) de boulons.

10. Module de palier de roue selon la revendication 1, dans lequel la bride (2c) s'applique au moins en partie axialement contre le support de roue (7).

11. Module de palier de roue selon la revendication 1, dans lequel le support de roue (7) vient en prise autour d'au moins deux pistes de roulement (2a) de la bague extérieure (2), un moyeu (5) étant supporté à rotation autour de l'axe de rotation (11) dans la bague extérieure (2) sur les pistes de roulement (2a) par le biais d'au moins deux rangées de corps de roulement (3), et la bride de roue (5d) partant radialement depuis le moyeu (5).

12. Module de palier de roue selon la revendication 1, dans lequel le moyeu (5) est supporté dans le palier de roue (8) de manière axialement inamovible par rapport à la bague extérieure (2).

13. Module de palier de roue selon la revendication 1, dans lequel la bague extérieure (2) est façonnée à froid d'une seule pièce.

14. Procédé de montage du module de palier de roue (1) selon la revendication 1, dans lequel le palier de roue (8) est monté avec un moyeu (5) et la bride de roue (5d) sous forme d'unité dans le support de roue (7), et est fixé sur le support de roue (7), le procédé comprenant les étapes de procédé suivantes :
- orienter les premiers évidements (5f) et les deuxièmes évidements (2f) par rotation des brides (2c, 5d) l'une par rapport à l'autre, de telle sorte que les premiers évidements (5f) soient axialement opposés simultanément les uns par rapport aux autres, à chaque fois à au moins l'un des deuxièmes évidements (2f), de telle sorte que la bride de roue (5d) ne couvre pas de deuxièmes évidements (2f) dans la direction axiale,
- introduire des boulons de centrage (25) dans les deuxièmes évidements (2f), les boulons de centrage (25) venant en prise axialement à travers au moins deux des premiers évidements (5f),
- supporter axialement la bride (2) sur les boulons de centrage (25) contre des forces d'enfoncement axiales, les boulons de centrage (25) venant en prise axialement à travers les premiers évidements (2f) jusqu'à ce que la bride (2c) soit supportée sur les boulons de centrage (25),
- introduire les boulons de centrage dans des trous de fixation (7b) du support de roue (7),
- enfoncer axialement le palier de roue (8) au moyen des forces d'enfoncement, la bride (2c) étant supportée axialement sur des appuis axiaux (24) à l'encontre des forces d'enfoncement axiales, chacun des appuis axiaux (24) venant en prise axialement à travers la bride de roue (5d) au niveau d'un autre des premiers évidements (5f), et s'appliquant axialement contre la bride (2c) à distance des deuxièmes évidements (2f),
- enlever les boulons de centrage (25) hors des trous de fixation (7b), hors des deuxièmes évidements (2f) et hors des premiers évidements (5f),
- fixer des boulons dans les trous de fixation (7b), un élément de fixation (14) étant à chaque fois introduit en tant que boulon axialement à travers l'un des premiers évidements (5f) dans l'un desdits deuxièmes évidements (2f) et ensuite étant fixé dans les trous de fixation (7b) de telle sorte qu'une tête (14a) du boulon s'applique axialement contre au moins l'un des bords de l'un des deuxièmes évidements (2f).
